(19) **Europäisches Patentamt European Patent Office Office européen des brevets**

(11) **EP 3 531 112 B1**

(12) **EUROPEAN PATENT SPECIFICATION**

(45) Date of publication and mention of the grant of the patent:
**04.05.2022 Bulletin 2022/18**

(21) Application number: **18826177.0**

(22) Date of filing: **21.12.2018**

(51) International Patent Classification (IPC):
**G01N 21/65** (2006.01)   **G01J 3/44** (2006.01)
**G01J 3/28** (2006.01)

(52) Cooperative Patent Classification (CPC):
**G01J 3/2803; G01J 3/0205; G01J 3/027; G01J 3/10; G01J 3/44; G01N 21/65;** G01J 3/0202

(86) International application number:
**PCT/CN2018/122870**

(87) International publication number:
**WO 2019/128880 (04.07.2019 Gazette 2019/27)**

(54) **RAMAN SPECTROSCOPY DETECTION DEVICE AND SAMPLE SAFETY DETECTION METHOD FOR USE IN RAMAN SPECTROSCOPY DETECTION**

RAMANSPEKTROSKOPIEDETEKTOR UND VERFAHREN ZUR ERKENNUNG DER SICHERHEIT EINER PROBE ZUR VERWENDUNG IN DER RAMANSPEKTROSKOPIEDETEKTION

DISPOSITIF DE DÉTECTION SPECTROSCOPIQUE RAMAN ET PROCÉDÉ DE DÉTECTION DE SÉCURITÉ D'ÉCHANTILLON DESTINÉ À ÊTRE UTILISÉ DANS LA DÉTECTION SPECTROSCOPIQUE RAMAN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2017 CN 201711439073**

(43) Date of publication of application:
**28.08.2019 Bulletin 2019/35**

(73) Proprietor: **Nuctech Company Limited Beijing 100084 (CN)**

(72) Inventors:
• **WANG, Hongqiu Beijing 100084 (CN)**
• **ZUO, Jiaqian Beijing 100084 (CN)**
• **LIU, Haihui Beijing 100084 (CN)**
• **ZHANG, Jianhong Beijing 100084 (CN)**

(74) Representative: **Carpmaels & Ransford LLP One Southampton Row London WC1B 5HA (GB)**

(56) References cited:
CN-A- 105 258 800   CN-A- 106 770 168
CN-A- 106 770 168   CN-A- 107 860 761
CN-A- 107 991 287   CN-U- 202 471 595
CN-U- 206 479 455   CN-U- 207 779 898
US-A1- 2009 303 471   US-A1- 2012 120 393
US-A1- 2012 147 358   US-A1- 2015 192 462
US-B2- 8 547 540

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND OF THE DISCLOSURE

### Field of the Disclosure

Embodiments of the present disclosure relate to the field of Raman spectrum inspection, and more particularly to a Raman spectrum inspection apparatus and a sample security inspecting method for Raman spectrum inspection.

### Description of the Related Art

Raman spectrum analysis technology is a non-contact spectrum analysis technology based on Raman scattering effect, which can analyze compositions of substances qualitatively and quantitatively. Raman spectrum is a molecular vibration spectrum that can reflect fingerprint features of molecules and that may be used to detect substances. Raman spectrum inspection detects and recognizes substances by detecting a Raman spectrum produced by the Raman scattering effect of an object to be inspected with an excitation light. Raman spectrum inspecting method has been applied widely in the fields of liquid security inspection, jewellery inspection, explosives inspection, drug inspection, medicine inspection, pesticide residue inspection, etc.

In recent years, the Raman spectrum analysis technology has been applied widely in the fields of inspection of hazardous articles and recognition of substances. In the field of substance recognition, people usually are unable to judge the properties of substances accurately because various substances have different colors and shapes. The Raman spectrum depends on level structure of molecules of an object to be inspected, thus the Raman spectrum may be used as "fingerprint" information of substances for substance recognition. Therefore, Raman spectrum analysis technology has been applied widely in the fields of customs, public safety, food, medicine, environment, etc.

CN106770168A describes a Raman spectrum inspection apparatus that comprises: a laser for emitting a laser; an optical guide means for guiding the laser light onto an object to be measured and collecting Raman scattered light from the object; spectral generating means for receiving the collected Raman scattered light and generating a Raman spectroscopic signal; spectral analysis means for analyzing the Raman spectral signal to obtain an inspection result; and a monitoring device for monitoring the state of the object and controlling the item checking operation according to the state of the object.

Raman spectrum requires a laser with high power density as an excitation light source, which may have a strong thermal effect. Thus, in a case that the sample is unknown, a rash inspection may cause the sample to be damaged or ablated by the laser, and may even cause ignition or detonation of some flammable and explosive chemicals by the laser, which lead to a loss in human body or properties.

### SUMMARY OF THE DISCLOSURE

The present application provides a Raman spectrum inspection apparatus and a sample security inspecting method for Raman spectrum inspection, which can effectively avoid an inspection risk that a sample to be inspected is damaged by an excitation light in acquiring Raman spectrum signals. The present invention is defined in the appended claims.

An embodiment of the present disclosure provides a Raman spectrum inspection apparatus, including:

an excitation light source configured to emit an excitation light to a sample to be inspected;
an optical device having a spectrum inspection optical path and a sample imaging optical path, wherein the spectrum inspection optical path is configured to collect a light signal from a location where the sample to be inspected is irradiated by the excitation light, and the sample imaging optical path comprises a camera configured to take an image of the sample to be inspected;
a spectrometer configured to receive a light signal from the spectrum inspection optical path and to generate a Raman spectrum of the sample to be inspected from the light signal; and
a sample security decision device configured to determine security of the sample to be inspected based on the image of the sample to be inspected that is taken by the sample imaging optical path,
wherein the sample security decision device includes:

a color histogram generating module configured to generate histograms of a plurality of colors according to the image of the sample to be inspected that is taken by the sample imaging optical path;
a color level ratio calculating module configured to calculate a ratio of an amount of pixels within a predetermined color level range in the histogram of each color to a total amount of pixels of the image; and a comparison module configured to compare the ratio of pixels within the predetermined color level range in the histogram of each color to the total amount of pixels of the image with a predetermined threshold, wherein in a case that the ratio of the amount of pixels within the predetermined color level range in the histogram of every color to the total amount of pixels of the image exceeds the predetermined threshold, it is determined that the sample to be inspected is unsafe; otherwise, it is determined that the sample to be inspected is safe.

In an embodiment, the sample imaging optical path includes a supplementary lighting lamp and an imaging device, wherein the supplementary lighting lamp is configured to irradiate the sample to be inspected, and the imaging device is configured to project the image of the sample to be inspected to the camera.

In an embodiment, the spectrum inspection optical path includes in order: a collection lens, a beam splitter, a Raman filter group, and a coupling lens, wherein the imaging device in the sample imaging optical path includes the collection lens, the beam splitter, and a focus lens group, and wherein the collection lens and the beam splitter are common components of the spectrum inspection optical path and the imaging device.

In an embodiment, the camera is a CCD camera having color channels of red, green, and blue.

In an embodiment, the histograms of the plurality of colors include histograms of red, green, and blue colors.

In an embodiment, the Raman spectrum inspection apparatus further includes: a controller configured to start the excitation light source to emit a light signal in a case that the sample security decision device determines that the sample to be inspected is safe, and to stop the excitation light source from emitting the light signal in a case that the sample security decision device determines that the sample to be inspected is unsafe.

An embodiment of the present disclosure provides a sample security inspecting method for Raman spectrum inspection, including:

taking an image of a sample to be inspected by using a sample imaging optical path;
generating histograms of a plurality of colors of the image;
calculating a ratio of amount of pixels within a predetermined color level range in the histogram of each color to a total amount of pixels of the image; and comparing the ratio of amount of pixels within the predetermined color leve range in the histogram of each color to the total amount of pixels of the image with a predetermined threshold,
wherein in a case that the ratio of the amount of pixels within the predetermined color level range in the histogram of every color to the total amount of pixels of the image exceeds the predetermined threshold, it is determined that the sample to be inspected is unsafe; otherwise, it is determined that the sample to be inspected is safe.

In an embodiment, the histograms of the plurality of colors include histograms of red, green, and blue colors.

In an embodiment, the generating histograms of a plurality of colors of the image includes:

reading image information of each color channel of the image, and recording the image information of each color channel into a color matrix, wherein elements in the matrix are in one-to-one correspondence with the pixels of the image;
dividing the levels of colors into a plurality of intervals, and counting an amount of elements within each interval in each color matrix, thereby forming histograms of the plurality of colors.

In an embodiment, a number of color levels in each interval is between 1 and 25.

In an embodiment, the predetermined color level range is 0 to m, wherein m is an integer with a value between 10 and 60.

In an embodiment, the predetermined threshold is greater than or equal to 0.72 and less than or equal to 0.98.

In an embodiment, the method further includes: starting the Raman spectrum inspection in a case that it is determined that the sample to be inspected is safe, and stopping the Raman spectrum inspection in a case that it is determined that the sample to be inspected is unsafe.

By means of the Raman spectrum inspection apparatus and the sample security inspecting method for Raman spectrum inspection according to the aforementioned embodiments, it is possible to reduce or prevent an inspection risk that the sample is ignited, ablated or detonated by the excitation light during spectrum inspection.

BRIEF DESCRIPTION OF THE DRAWINGS

FIG. 1 shows a schematic diagram of a Raman spectrum inspection apparatus according to an embodiment of the present disclosure;
FIG. 2 shows a flow chart of a sample security inspecting method according to an embodiment of the present disclosure;
FIG. 3 shows an example of a color histogram of an image of a sample inspected by a sample security inspecting method according to an embodiment of the present disclosure;
FIG. 4 shows an example of a color histogram of an image of another sample inspected by a sample security inspecting method according to an embodiment of the present disclosure; and
FIG. 5 shows an example of a color histogram of an image of a yet further sample inspected by a sample security inspecting method according to an embodiment of the present disclosure.

All of circuits and structures in the security inspection apparatus, which inspects an object, of the embodiment according to the present disclosure are not shown. Same reference numerals represent same or similar components or features throughout all of the figures.

DETAILED DESCRIPTION OF THE EMBODIMENTS

Technical solutions of the present disclosure will be described hereinafter in more detail by the way of embodiments with reference to the attached drawings. Same or similar reference numerals refer to same or similar components throughout the description. The following explanation to the embodiments of the present disclosure with reference to the attached drawings is intended to interpret a general concept of the present disclosure, rather than being construed as a limiting to the present disclosure.

Additionally, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are shown schematically in order to simplify the drawings.

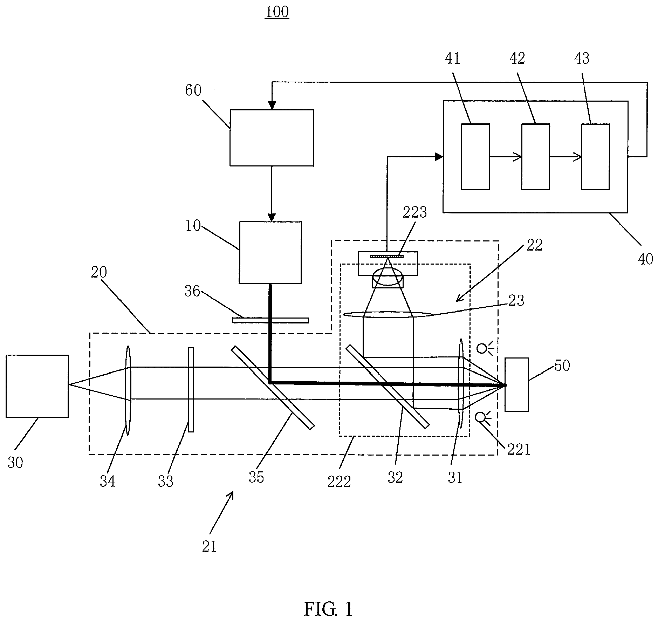

An embodiment of the present disclosure provides a Raman spectrum inspection apparatus 100. As shown in FIG. 1, the Raman spectrum inspection apparatus 100 includes an excitation light source 10, an optical device 20, a spectrometer 30, and a sample security decision device 40. The excitation light source 10, which may include a laser for example, is configured to emit an excitation light to a sample 50 to be inspected. The optical device 20 has two optical paths, i.e., a spectrum inspection optical path 21 and a sample imaging optical path 22. The spectrum inspection optical path 21 is configured to collect a light signal from a location where the sample 50 to be inspected is irradiated by the excitation light. The collected light signal may be transmitted to the spectrometer 30. The spectrometer 30 may be configured to receive a light signal from the spectrum inspection optical path 21, and to generate a Raman spectrum of the sample 50 to be inspected from the light signal, thereby implementing a normal flow of the Raman spectrum inspection. The sample imaging optical path 22 is configured to take an image of the sample 50 to be inspected, which is then transmitted to the sample security decision device 40. The sample security decision device 40 may be configured to determine the security of the sample 50 to be inspected based on the image of the sample 50 to be inspected that is taken by the sample imaging optical path 22.

As mentioned above, acquiring optical signals by using the excitation light is a basic step in the Raman spectrum inspection of a sample to be inspected, and the excitation light itself has a certain amount of energy. For a sample to be inspected of some materials, it may react with the excitation light, resulting in some changes in the composition of the sample. For example, some flammable and explosive materials may be ignited, ablated, detonated and so on under the action of the excitation light. In practice, the composition of the sample to be inspected is usually unknown, therefore it needs to inspect the security of the sample to be inspected before formal light signal acquisition and measurement. In the Raman spectrum inspection apparatus 100 according to an embodiment of the present disclosure, the security of the sample to be inspected is determined by the appearance of the sample 50 to be inspected. It is indicated in practice that samples to be inspected, which may be easily ignited, ablated or detonated by an excitation light, are substantially dark in color, such as black. For this reason, by analyzing the image of the sample 50 to be inspected, the security of the sample to be inspected may be determined to some extent. Once it is found that the sample to be inspected may have a security problem, it is possible to stop a normal operation of the Raman spectrum inspection apparatus immediately so as to avoid danger.

In an example, in order to better obtain a clear image of the sample to be inspected, the sample imaging optical path 22 may include a supplementary lighting lamp 221, an imaging device 222, and a camera 223. The supplementary lighting lamp 221 is mainly used to provide sufficient light intensity for taking images of the sample to be inspected. Usually, the sample to be inspected is close to a component (e.g., a collection lens) at a front end of the optical device during the Raman inspection process, therefore, the external ambient light is not easy to sufficiently irradiate the sample to be inspected. In this case, the role of the supplementary lighting lamp is especially important. The supplementary lighting lamp 221 is configured to irradiate the sample to be inspected, for example, by various lamps known in the art, such as halogen lamps, incandescent lamps, LED lamps, etc., which are capable of providing sufficient irradiation intensity. The imaging device 222 is configured to project an image of a sample 50 to be inspected to the camera 223. In order to achieve better imaging, the imaging device 222 may include, for example, a collection lens 31, a focus lens group 23, etc. In the example of FIG. 1, the focus lens group 23 is composed of two lenses, but this is merely exemplary, and the embodiments of the present disclosure are not limited to this. The focus lens group 23 may be composed of any amount of lenses, or may be formed by any lens group that is known in the art and capable of achieving clear imaging.

In an example, the spectrum inspection optical path 21 may include in order: a collection lens 31, a beam splitter 32, a Raman filter group 33, and a coupling lens 34. The imaging device 222 in the sample imaging optical path 22 includes the collection lens 31, the beam splitter 32, and a focus lens group 23. The spectrum inspection optical path 21 and the imaging device 222 share the collection lens 31 and the beam splitter 32 as their common components. As an example, the Raman filter group 33 may include one or more optical filters for filtering undesired light such as Rayleigh scattering light and the excitation light, while preserving the Raman scattering light signal. The coupling lens 34 may be used to couple the light signal, which has been filtered by the Raman filter group 33, to the spectrometer 30. In the example shown in FIG. 1, the spectrum inspection optical path 21 and the sample imaging optical path 22 have a common portion close to the sample 50 to be inspected. The beam splitter 32 allows the light signal from the sample 50 to be inspected to pass through to the spectrometer, thereby forming the spectrum inspection optical path 21. The beam splitter 32 reflects the light beam, which has an image of the sample to be inspected, to form a sample imaging optical path 22. It should be noted that, though the spectrum inspection optical path 21 and the sample imaging optical path 22 have a common portion, this does not mean that the operations of spectrum inspection and sample imaging must be performed simultaneously, for example, the sample imaging operation is usually performed before the spectrum inspection, so that the security of the sample to be inspected is determined before the spectrum inspection to avoid danger during the spectrum inspection. As an example, the optical path of the excitation light source 10 that emits the excitation light may also partly coincide with the spectrum inspection optical path 21, for example, as shown in FIG. 1, another beam splitter 35 may be provided, which may reflect the excitation light emitted from the excitation light source 10. The reflected excitation light is concentrated on the sample 50 to be inspected by the collection lens 31, which helps to simplify the adjustment of the optical path. However, the embodiments of the present disclosure are not limited to this, for example, the light emitted from the excitation light source 10 may pass through a light path, which is completely independent from the spectrum inspection optical path, to irradiate the sample to be inspected. As an example, the excitation light may further pass through a stray light removal filter 36 after it is emitted from the excitation light source 10. The stray light removal filter 36 may be used to remove stray light to increase an SNR (signal-to-noise ratio) of the excitation light.

The above example is merely an exemplary implementation of the Raman spectrum inspection apparatus, but the embodiments of the present disclosure are not limited to this. For example, the spectrum inspection optical path 21 and the sample imaging optical path 22 may also be completely independent from each other.

As an example, the camera 223 may be a CCD (Charge Coupled Device) camera having color channels of red, green, and blue. However, the embodiments of the present disclosure are not limited to this, and a camera having other color channels may also be used to acquire the above image.

As an example, the sample security decision device 40 may include a color histogram generating module 41, a color level ratio calculating module 42, and a comparison module 43. The color histogram generating module 41 may be configured to generate histograms of a plurality of colors according to the image of the sample 50 to be inspected that is taken by the sample imaging optical path 22. The color level (gradation) ratio calculating module 42 may be configured to calculate a ratio of an amount of pixels within a predetermined color level range in the histogram of each color to a total amount of pixels of the image. The comparison module 43 may be configured to compare the ratio of amount of pixels within the predetermined color level range in the histogram of each color to the total amount of pixels of the image with a predetermined threshold. In a case that the ratio of the amount of pixels within the predetermined color level range in the histogram of every color to the total amount of pixels of the image exceeds the predetermined threshold, it is determined that the sample to be inspected is unsafe; otherwise, it is determined that the sample to be inspected is safe.

As mentioned above, the security of the sample to be inspected for Raman spectrum inspection is greatly related to the color of the sample to be inspected. Therefore, by creating a color histogram of the image of the sample to be inspected, it may find out samples to be inspected, which have a specified color (e.g., black or dark color), to avoid potential inspection risks.

As an example, the histograms of the plurality of colors may include histograms of red, green, and blue colors. This may correspond to the camera 223 with red, green and blue colors. Usually, histograms of red, green, and blue colors are sufficient to reflect the color state of the image. However, the embodiments of the present disclosure are not limited to this, for example, the histograms of the plurality of colors may further include histograms of other colors such as yellow, cyan, etc., to adapt to different image information.

In an example, a Raman spectrum inspection apparatus according to an embodiment of the present disclosure may further include a controller 60. The controller 60 may be configured to start an excitation light source to emit a light signal if the sample security decision device 40 determines that the sample to be inspected is safe, and to stop the excitation light source from emitting a light signal if the sample security decision device determines that the sample to be inspected is unsafe. As an example, the controller 60 may be in communication with the sample security decision device 40. In a case that the sample security decision device 40 determines that the sample to be inspected is safe, the sample security decision device 40 may send a sample safe signal to the controller 60. After receiving this signal, the controller 60 sends a start signal to the excitation light source 10. In a case that the sample security decision device 40 determines that the sample to be inspected is unsafe, the sample security decision device 40 may send a sample dangerous signal to the controller 60. After receiving this signal, the controller 60 does not send a start signal to the excitation light source 10, or it sends a stop signal to the excitation light source 10.

As an example, both the sample security decision device 40 and the controller 60 may be implemented by a processor or other computing device.

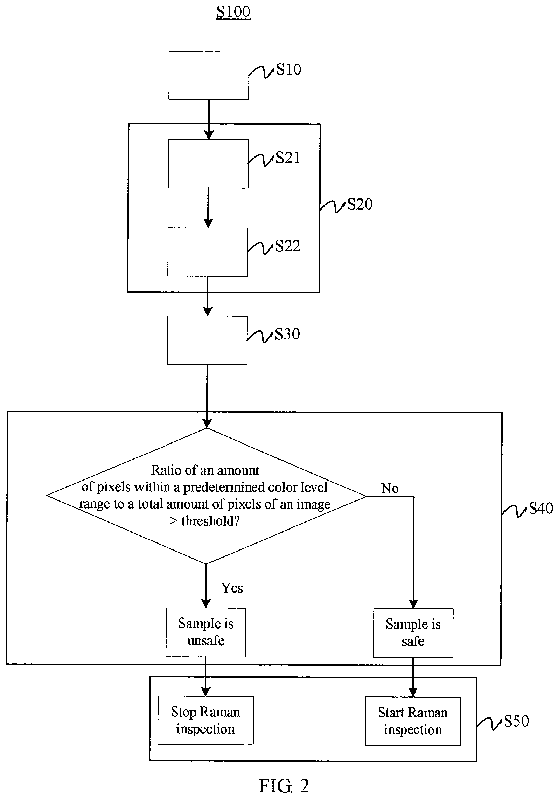

A sample security inspecting method for Raman spectrum inspection according to an embodiment of the present disclosure will be described below. As shown in FIG. 2, the sample security inspecting method S100 includes:

Step S10: taking an image of a sample to be inspected by using a sample imaging optical path;

Step S20: generating histograms of a plurality of colors of the image;

Step S30: calculating a ratio of an amount of pixels within a predetermined color level range in the histogram of each color to a total amount of pixels of the image; and

Step S40: comparing the ratio of the amount of pixels within the predetermined color level range in the histogram of each color to the total amount of pixels of the image with the predetermined threshold; in a case that the ratio of the amount of pixels within the predetermined color level range in the histogram of every color to the total amount of pixels of the image exceeds the predetermined threshold, it is determined that the sample to be inspected is unsafe; otherwise, it is determined that the sample to be inspected is safe.

As an example, the histograms of the plurality of colors include histograms of red, green, and blue colors. In an example, the step S20 includes:

Step S21: reading image information of each color channel of the image, and recording the image information of each color channel into a color matrix, wherein elements in the matrix are in one-to-one correspondence with the pixels of the image; and

Step S22: dividing the levels of colors into a plurality of intervals, and counting an amount of elements within each interval in each color matrix, thereby forming histograms of the plurality of colors.

As an example, the sample security inspecting method S100 may further include:

Step S50: starting the Raman spectrum inspection in a case that it is determined that the sample to be inspected is safe, and stopping the Raman spectrum inspection in a case that it is determined that the sample to be inspected is unsafe.

A specific calculation example is given below: First, an image I of a sample to be inspected is acquired by using a CCD camera having color channels of red, green, and blue.

Then, a processor (e.g., a microprocessor ($\mu$P), a digital signal processor (DSP), etc.) is selected to read the image I acquired by the CCD camera.

Then, the image information of three color channels of red (R), green (G), and blue (B) of the image I is read sequentially, and recorded as IR, IG, and IB, wherein each of IR, IG, and IB represents a matrix. The elements of the matrix are in one-to-one correspondence with the pixels of the image. The number of rows of the matrix and the number of columns of the matrix are also the same as the number of rows of pixels of the image and the number of columns of pixels of the image, respectively.

Next, IR(i, j), IG(i, j), and IB(i, j) are read, where i, j represent a pixel of the $i^{th}$ row and the jth column of the acquired image, and i = 1, 2, ..., I.width, j = 1, 2, ..., I.length. The term "I.width" represents a number of columns of pixels, or is referred to as an amount of pixels in a width direction of the image, or an image width of the image; and "I.length" represents a number of rows of pixels, or is referred to as an amount of pixels in a length direction of the image, or a length of the image. An image size (i.e., a total amount of pixels) is recorded as **Size** = I.width*I.length, wherein "*" indicates a product sign.

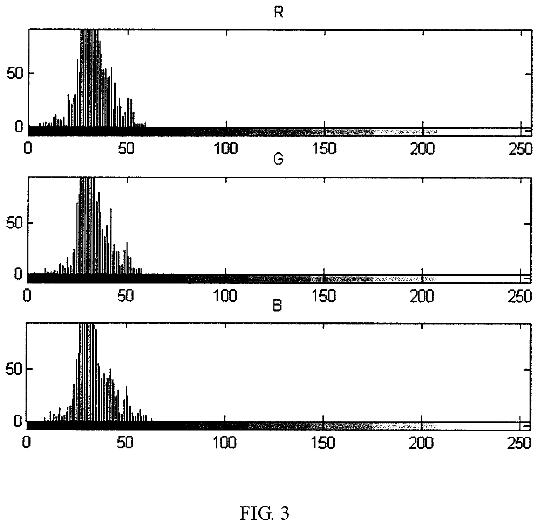

Then, the color level 0~255 is taken as the abscissa of the color histogram, and the color level is divided into $N$ intervals, and the range of each interval BIN($n$) is BIN($n$)=[($n$-1)*255/$N$, $n$*255/$N$], where n=1, 2, ... $N$, and "*" indicates a product sign, and "/" indicates a division sign. As shown in FIGS. 3 to 5, the color level is divided into 256 intervals, and a number of color level(s) within each interval is 1, and each color level is represented by one of the 256 integers between 0 and 255. However, the embodiments of the present disclosure are not limited to this. For example, the number of color levels within each interval may be between 1 and 25, and the number of color levels within each interval may be additionally determined according to actual needs.

Then, for the color channel of red, a number of occurrences of color levels in each interval BIN($n$) in the image is counted. For example, the number of pixels that satisfy ($n$-1)*255/$N$≤IR(i, j)<$n$*255/$N$ may be calculated by exhausting all pixels in the image, for example, by adding in an accumulated manner. Similarly, for the color channels of green and blue, the number of occurrences of color levels in the each interval BIN($n$) in the image is also counted.

Next, it is determined whether each of the R, G, B color histograms of the interval [0, $m$] exceeds a threshold, where [0, $m$] represents a predetermined range of color levels, for example, a range of values of $m$ may be [10, 60].

In order to determine whether the R, G, and B color histograms of the interval [0, $m$] exceed the threshold, it is necessary to calculate a ratio (or frequency) **R** of pixels within the predetermined color level range to the total amount of pixels of the image for the three colors of R, G, and B, respectively:

$$R = \sum_{k=1}^{K} \text{BIN}(k) \Big/ Size ,$$

where K=$N*m$/256.

For example, in the examples in FIGS. 3 to 5, if it selects $m$=30, $N$=256, then K=$N*m$/256=256*30/256=30, that is, it counts the color histograms within the interval BIN($k$) ($k$=1, 2, ..., 30), and calculate the above ratio.

In order to determine whether the R, G, B color histograms of the interval [0, m] exceed the threshold, it is necessary to select a threshold Th. As an example, a range of the value of Th may be [0.72, 0.98]. In the examples shown in FIGS. 3 to 5, it selects Th = 0.85. When all of the above ratios (represented by RR, RG, and RB, respectively) calculated for the R, G, and B colors are larger than the threshold, it is determined that the sample to be inspected may be substance with dark or black color, which may be dangerous for the sample to be inspected or the operator.

When the ratio of the amount of pixels within the predetermined color level range in the histogram of every color to the total amount of pixels of the image exceeds the threshold value, that is, when the sample or the sample surface is substance with dark or black color, it may be ablated after being irradiated by laser, so it is possible to stop the measurement and wait for the next measurement; otherwise, the recognition for Raman spectrum will be performed. As an example, when all of the RR, RG, and RB are larger than the threshold, the processor (e.g., a microprocessor ($\mu$P), a digital signal processor (DSP), etc.) may send a command signal to stop the laser light emission; otherwise, it continues to recognize the Raman spectrum.

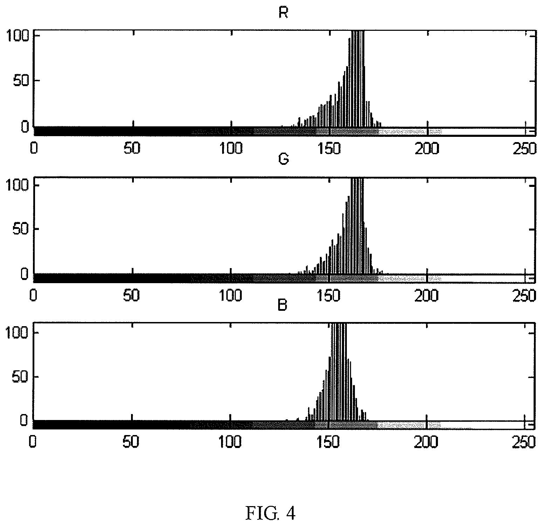

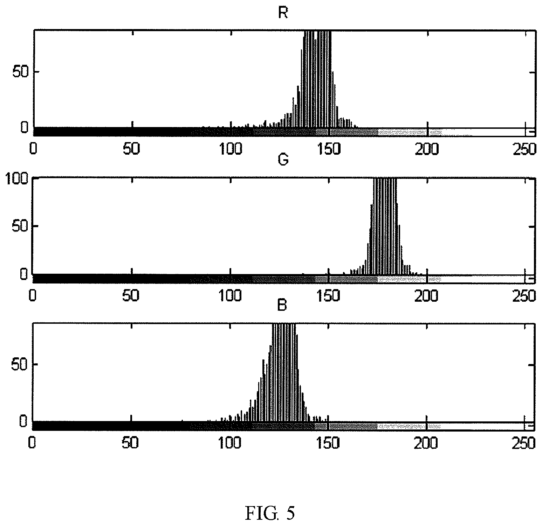

FIGS. 3 to 5 respectively show R, G, and B color histograms (listed in an order from top to bottom) for three different samples to be inspected, which are inspected according to the method as described above. The abscissa of FIGS. 3 to 5 is the color level, while the ordinate is the amount of samples (corresponding to the amount of pixels in the present embodiment). For the example shown in FIG. 3, all of the RR, RG, and RB of the interval [0, 30] are larger than the threshold 0.85, so it may be determined that the sample may have a risk. For the examples in FIGS. 4 and 5, all of the RR, RG, and RB of the interval [0, 30] in the color histograms are far less than the threshold 0.85, so it may be determined that the sample does not have the risk.

The above examples are merely for explaining the calculation process of determining the inspection risk of the sample to be inspected by using the color histogram of the image. The embodiments of the present disclosure are not limited to this, and other methods are also feasible as long as it may accurately determine the color of the sample to be inspected by the color histogram of the image.

The above description has explained various embodiments of the above inspection apparatus for inspecting the security of an object and a inspecting method thereof by schematic views, flow charts and/or examples. In case that the schematic views, flow charts and/or examples each include one or more functions and/or operations, the skilled person in the art should understand that each function and/or operation in such schematic views, flow charts and/or examples may be implemented separately and/or collectively by various structures, hardware, software, firmware or any combination of them in essential. In an embodiment, some parts of the subject of the embodiments of the present disclosure may be implemented by Application Specific Integrated Circuits (ASIC), Field Programmable Gate Arrays (FPGA), Digital Signal Processors (DSP) or other integrated forms. Nonetheless, the skilled person in the art should understand that some aspects of the embodiments disclosed herein may be implemented equally in the integrated circuit entirely or partly, implemented as one or more computer programs executed in one or more computers (e.g., implemented as one or more programs running on one or more computer systems), implemented as one or more programs running on one or more processors (e.g., implemented as one or more programs running on one or more microprocessors), implemented as firmware, or implemented as any combination of the above methods in essential. From the present disclosure, the skilled person in the art has capability of designing circuits and/or writing software and/or firmware codes. Furthermore, the skilled person in the art will appreciate that the mechanism of the subject of the present disclosure may be delivered as various forms of program products, and the exemplified embodiments of the subject of the present disclosure may be applicable independent of the specific types of the signal carrying media that perform the delivery in practice. Examples of the signal carrying media include, but not limited to: recordable media, such as a floppy disc, a hard disk drive, an optical disc (CD, DVD), a digital magnetic tape, a computer memory or the like; and transmission media such as digital and/or analogue communication media (for example, an optical fiber cable, a wave guide, a wired communication link, a wireless communication link, etc.).

Any of the above embodiments of the present disclosure may be combined freely to form other embodiments unless there are technical obstacles or contradictions. All of these other embodiments fall within the protection scope of the present disclosure as defined by the appended claims.

Although the present disclosure has been explained with reference to the drawings, the embodiments shown in the drawings are only illustrative, instead of limiting the present disclosure. Scales in the drawings are only illustrative, instead of limiting the present disclosure.

**Claims**

**1.** A Raman spectrum inspection apparatus (100), comprising:

an excitation light source (10) configured to emit an excitation light to a sample (50) to be inspected;

an optical device (20) having a spectrum inspection optical path (21) and a sample imaging optical path (22), wherein the spectrum inspection optical path (21) is configured to collect a light signal from a location where the sample (50) to be inspected is irradiated by the excitation light, and the sample imaging optical path (22) comprises a camera (223) configured to take an image of the sample (50) to be inspected;

a spectrometer (30) configured to receive a light signal from the spectrum inspection optical path (21) and to generate a Raman spectrum of the sample (50) to be inspected from the light signal; and

a sample security decision device (40) configured to determine security of the sample (50) to be inspected based on the image of the sample (50) to be inspected that is taken by the sample imaging optical path (22),

wherein the sample security decision device (40) comprises:

a color histogram generating module (41) configured to generate histograms of a plurality of colors according to the image of the sample (50) to be inspected that is taken by the sample imaging optical path (22);

a color level ratio calculating module (42) configured to calculate a ratio of an amount of pixels within a predetermined color level range in the histogram of each color to a total amount of pixels of the image; and

a comparison module (43) configured to compare the ratio of pixels within the predetermined color level range in the histogram of each color to the total amount of pixels of the image with a predetermined threshold,

wherein in a case that the ratio of the amount of pixels within the predetermined color level range in the histogram of every color to the total amount of pixels of the image exceeds the predetermined threshold, it is determined that the sample to be inspected is unsafe; otherwise, it is determined that the sample to be inspected is safe.

2. The Raman spectrum inspection apparatus (100) according to claim 1, wherein a supplementary lighting lamp and an imaging device (222) are provided in the sample imaging optical path (22), wherein the supplementary lighting lamp (221) is configured to irradiate the sample (50) to be inspected, and the imaging device (222) is configured to project the image of the sample (50) to be inspected to the camera (223).

3. The Raman spectrum inspection apparatus (100) according to claim 2, wherein a collection lens (31), a beam splitter (32), a Raman filter group (33), and a coupling lens (34) are provided in order in the spectrum inspection optical path (21),

wherein the imaging device (222) in the sample imaging optical path (22) comprises the collection lens (31), the beam splitter (32), and a focus lens group (23), and

wherein the collection lens (31) and the beam splitter (32) are common components of the spectrum inspection optical path (21) and the imaging device (222).

4. The Raman spectrum inspection apparatus (100) according to claim 1 or 2, wherein the camera (223) is a CCD camera having color channels of red, green, and blue.

5. The Raman spectrum inspection apparatus (100) of any preceding claim, wherein the histograms of the plurality of colors comprise histograms of red, green, and blue colors.

6. The Raman spectrum inspection apparatus (100) according to any one of claims 1 to 4, further comprising:
a controller (60) configured to start the excitation light source to emit a light signal in a case that the sample security decision device (40) determines that the sample (50) to be inspected is safe, and to stop the excitation light source from emitting the light signal in a case that the sample security decision device (40) determines that the sample (50) to be inspected is unsafe.

7. A sample security inspecting method for Raman spectrum inspection of a sample, comprising:

taking an image of the sample to be inspected by using a sample imaging optical path;

generating histograms of a plurality of colors of the image;

calculating a ratio of amount of pixels within a predetermined color level range in the histogram of each color to a total amount of pixels of the image; and

comparing the ratio of amount of pixels within the predetermined color leve range in the histogram of each color to the total amount of pixels of the image with a predetermined threshold,

wherein in a case that the ratio of the amount of pixels within the predetermined color level range in the histogram of every color to the total amount of pixels of the image exceeds the predetermined threshold, it is determined that the sample to be inspected is unsafe; otherwise, it is determined that the sample to be inspected is safe.

8. The method according to claim 7, wherein the histograms of the plurality of colors comprise histograms of red, green, and blue colors.

9. The method according to claim 7, wherein said generating histograms of a plurality of colors of the image comprises:

   reading image information of each color channel of the image, and recording the image information of each color channel into a color matrix, wherein elements in the matrix are in one-to-one correspondence with the pixels of the image; dividing the levels of colors into a plurality of intervals, and counting an amount of elements within each interval in each color matrix, thereby forming histograms of the plurality of colors.

10. The method according to claim 9, wherein a number of color levels in each interval is between 1 and 25.

11. The method according to claim 9, wherein the predetermined color level range is 0 to m, wherein m is an integer with a value between 10 and 60.

12. The method according to claim 9, wherein the predetermined threshold is greater than or equal to 0.72 and less than or equal to 0.98.

13. The method according to any one of claims 7 to 12, further comprising:
    starting the Raman spectrum inspection in a case that it is determined that the sample to be inspected is safe, and stopping the Raman spectrum inspection in a case that it is determined that the sample to be inspected is unsafe.

**Patentansprüche**

1. Ramanspektruminspektionsapparat (100), umfassend:

   eine Anregungslichtquelle (10), die ausgestaltet ist, um ein Anregungslicht auf eine zu inspizierende Probe (50) zu emittieren; eine optische Vorrichtung (20) mit einem optischen Spektruminspektionspfad (21) und einem optischen Probenbildgebungspfad (22), wobei der optische Spektruminspektionspfad (21) ausgestaltet ist, um ein Lichtsignal von einem Ort zu sammeln, wo die zu inspizierende Probe (50) von dem Anregungslicht bestrahlt wird, und wobei der optische Probenbildgebungspfad (22) eine Kamera (223) umfasst, die ausgestaltet ist, um ein Bild der zu inspizierenden Probe (50) aufzunehmen; ein Spektrometer (30), das ausgestaltet ist, um ein Lichtsignal von dem optischen Spektruminspektionspfad (21) zu empfangen und ein Ramanspektrum der zu inspizierenden Probe (50) aus dem Lichtsignal zu generieren; und eine Probensicherheitsentscheidungsvorrichtung (40), die ausgestaltet ist, um die Sicherheit der zu inspizierenden Probe (50) basierend auf dem Bild der zu inspizierenden Probe (50) zu ermitteln, das durch den optischen Probenbildgebungspfad (22) aufgenommen wurde, wobei die Probensicherheitsentscheidungsvorrichtung (40) umfasst:

   ein Farbhistogrammgenerierungsmodul (41), das ausgestaltet ist, um Histogramme von einer Vielzahl von Farben gemäß dem Bild der zu inspizierenden Probe (50) zu generieren, welches durch den optischen Probenbildgebungspfad (22) aufgenommen wurde; ein Farbniveauverhältnisberechnungsmodul (42), das ausgestaltet ist, um ein Verhältnis von einer Menge an Pixeln innerhalb eines vorgegebenen Farbniveaubereichs in dem Histogramm von jeder Farbe zu einer Gesamtmenge der Pixel des Bildes zu berechnen; und ein Vergleichsmodul (43), das ausgestaltet ist, um das Verhältnis der Pixel innerhalb des vorgegebenen Farbniveaubereichs in dem Histogramm von jeder Farbe zu der Gesamtmenge der Pixel des Bildes mit einem vorgegebenen Schwellenwert zu vergleichen, wobei in dem Fall, dass das Verhältnis der Menge an Pixeln innerhalb des vorgegebenen Farbniveaubereichs in dem Histogramm von jeder Farbe zu der Gesamtmenge der Pixel des Bildes den vorgegebenen Schwellenwert übersteigt, ermittelt wird, dass die zu inspizierende Probe nicht sicher ist; wobei ansonsten ermittelt wird, dass die inspizierte Probe sicher ist.

2. Ramanspektruminspektionsapparat (100) nach Anspruch 1, wobei eine ergänzende Beleuchtungslampe und eine Bildgebungsvorrichtung (222) in dem optischen Probenbildgebungspfad (22) bereitgestellt werden, wobei die ergänzende Beleuchtungslampe (221) ausgestaltet ist, um die zu inspizierende Probe (50) zu bestrahlen, und die Bildgebungsvorrichtung (222) ausgestaltet ist, um das Bild der zu inspizierenden Probe (50) auf die Kamera (223) zu projizieren.

3. Ramanspektruminspektionsapparat (100) nach Anspruch 2, wobei eine Sammellinse (31), ein Strahlteiler (32), eine Ramanfiltergruppe (33) und eine Kopplungslinse (34) in der Reihenfolge in dem optischen Spektruminspektionspfad (21) bereitgestellt werden,

wobei die Bildgebungsvorrichtung (222) in dem optischen Probenbildgebungspfad (22) die Sammellinse (31), den Strahlteiler (32) und eine Fokuslinsengruppe (23) umfasst, und wobei die Sammellinse (31) und der Strahlteiler (32) gemeinsame Komponenten des optischen Spektruminspektionspfads (21) und der Bildgebungsvorrichtung (222) sind.

4. Ramanspektruminspektionsapparat (100) nach Anspruch 1 oder 2, wobei die Kamera (223) eine CCD-Kamera mit Farbkanälen von rot, grün und blau ist.

5. Ramanspektruminspektionsapparat (100) nach einem der vorhergehenden Ansprüche, wobei die Histogramme der Vielzahl von Farben Histogramme aus roten, grünen und blauen Farben umfassen.

6. Ramanspektruminspektionsapparat (100) nach einem der Ansprüche 1 bis 4, des Weiteren umfassend:
eine Steuerung (60), die ausgestaltet ist, um die Anregungslichtquelle zu starten, um in dem Fall, dass die Probensicherheitsentscheidungsvorrichtung (40) ermittelt, dass die zu inspizierende Probe (50) sicher ist, ein Lichtsignal zu emittieren, und um das Emittieren des Lichtsignals durch die Anregungslichtquelle in einem Fall zu stoppen, dass die Probensicherheitsentscheidungsvorrichtung (40) ermittelt, dass die zu inspizierende Probe (50) nicht sicher ist.

7. Probensicherheitsinspektionsverfahren zur Inspektion einer Probe mittels Ramanspektrum, umfassend:

Aufnehmen eines Bildes der zu inspizierenden Probe unter Verwendung eines optischen Probenbildgebungspfads;
Generieren von Histogrammen von einer Vielzahl von Farben des Bildes;
Berechnen eines Verhältnisses von einer Menge an Pixeln innerhalb eines vorgegebenen Farbniveaubereichs in dem Histogramm von jeder Farbe zu einer Gesamtmenge der Pixel des Bildes; und
Vergleichen des Verhältnisses der Menge an Pixeln innerhalb eines vorgegebenen Farbniveaubereichs in dem Histogramm von jeder Farbe zu einer Gesamtmenge der Pixel des Bildes mit einem vorgegebenen Schwellenwert,
wobei in dem Fall, dass das Verhältnis der Menge an Pixeln innerhalb des vorgegebenen Farbniveaubereichs in dem Histogramm von jeder Farbe zu der Gesamtmenge der Pixel des Bildes den vorgegebenen Schwellenwert übersteigt, ermittelt wird, dass die zu inspizierende Probe nicht sicher ist; wobei ansonsten ermittelt wird, dass die inspizierte Probe sicher ist.

8. Verfahren nach Anspruch 7, wobei die Histogramme der Vielzahl von Farben Histogramme aus roten, grünen und blauen Farben umfassen.

9. Verfahren nach Anspruch 7, wobei das Generieren von Histogrammen aus einer Vielzahl der Farben des Bildes umfasst:

Lesen von Bildinformationen von jedem Farbkanal des Bildes, und Aufzeichnen der Bildinformationen jedes Farbkanals zu einer Farbmatrix, wobei Elemente in der Matrix in einer eins-zu-eins-Beziehung mit den Pixeln des Bildes sind; Teilen der Niveaus der Farben in eine Vielzahl der Intervalle, und Zählen einer Menge der Elemente innerhalb jedes Intervalls in jeder Farbmatrix, wodurch Histogramme von der Vielzahl der Farben gebildet werden.

10. Verfahren nach Anspruch 9, wobei eine Anzahl der Farbniveaus in jedem Intervall zwischen 1 und 25 liegt.

11. Verfahren nach Anspruch 9, wobei der vorgegebene Farbniveaubereich 0 bis m ist, wobei m eine ganze Zahl mit einem Wert zwischen 10 und 60 ist.

12. Verfahren nach Anspruch 9, wobei der vorgegebene Schwellenwert größer als oder gleich 0,72 und kleiner als oder gleich 0,98 ist.

13. Verfahren nach einem der Ansprüche 7 bis 12, des Weiteren umfassend:
Starten der Ramanspektruminspektion in dem Fall, dass ermittelt wird, dass die zu inspizierende Probe sicher ist, und Stoppen der Ramanspektruminspektion in dem Fall, dass ermittelt wird, dass die zu inspizierende Probe nicht sicher ist.

**Revendications**

1. Appareil d'inspection par spectrométrie Raman (100), comprenant :

une source de lumière d'excitation (10) configurée pour émettre une lumière d'excitation vers un échantillon (50) à inspecter ;

un dispositif optique (20) ayant un chemin optique d'inspection spectrométrique (21) et un chemin optique d'imagerie d'échantillon (22), où le chemin optique d'inspection spectrométrique (21) est configuré pour collecter un signal lumineux depuis un emplacement où l'échantillon (50) à inspecter est irradié par la lumière d'excitation, et le chemin optique d'imagerie d'échantillon (22) comprend une caméra (223) configurée pour prendre une image de l'échantillon (50) à inspecter ; et

un spectromètre (30) configuré pour recevoir un signal lumineux provenant du chemin optique d'inspection spectrométrique (21) et pour générer un spectre Raman de l'échantillon (50) à inspecter à partir du signal lumineux ; et

un dispositif de décision de sécurité d'échantillon (40) configuré pour déterminer la sécurité de l'échantillon (50) à inspecter sur la base de l'image de l'échantillon (50) à inspecter qui est prise par le chemin optique d'imagerie d'échantillon (22),

où le dispositif de décision de sécurité d'échantillon (40) comprend :

un module de génération d'histogramme de couleur (41) configuré pour générer des histogrammes d'une pluralité de couleurs selon l'image de l'échantillon (50) à inspecter qui est prise par le chemin optique d'imagerie d'échantillon (22) ;

un module de calcul de rapport de niveau de couleur (42) configuré pour calculer un rapport entre une quantité de pixels dans une plage de niveaux de couleurs prédéterminée dans l'histogramme de chaque couleur et une quantité totale de pixels de l'image ; et

un module de comparaison (43) configuré pour comparer le rapport des pixels à l'intérieur de la plage de niveaux de couleurs prédéterminée dans l'histogramme de chaque couleur sur la quantité totale de pixels de l'image avec un seuil prédéterminé,

où, dans le cas où le rapport de la quantité de pixels à l'intérieur de la plage de niveaux de couleurs prédéterminée dans l'histogramme de chaque couleur sur la quantité totale de pixels de l'image dépasse le seuil prédéterminé, il est prédéterminé que l'échantillon à inspecter n'est pas sûr ; sinon, il est déterminé que l'échantillon à inspecter est sûr.

2. Appareil d'inspection par spectrométrie Raman (100) selon la revendication 1, dans lequel une lampe d'éclairage supplémentaire et un dispositif d'imagerie (222) sont pourvus sur le chemin optique d'imagerie d'échantillon (22), où la lampe d'éclairage supplémentaire (221) est configurée pour irradier l'échantillon (50) à inspecter, et le dispositif d'imagerie (222) est configuré pour projeter l'image de l'échantillon (50) à inspecter vers la caméra (223).

3. Appareil d'inspection par spectrométrie Raman (100) selon la revendication 2, dans lequel une lentille de collecte (31), un séparateur de faisceau (32), un groupe de filtres Raman (33), et une lentille de couplage (34) sont pourvus, dans l'ordre, sur le chemin optique d'inspection spectrométrique (21),

où le dispositif d'imagerie (222) sur le chemin optique d'imagerie d'échantillon (22) comprend la lentille de collecte (31), le séparateur de faisceau (32), et un groupe de lentilles de focalisation (23), et

où la lentille de collecte (31) et le diviseur de faisceau (32) sont des composants communs du chemin optique d'inspection spectrométrique (21) et du dispositif d'imagerie (222).

4. Appareil d'inspection par spectrométrie Raman (100) selon la revendication 1 ou la revendication 2, dans lequel la caméra (223) est une caméra CCD ayant des canaux de couleurs rouge, verte et bleue.

5. Appareil d'inspection par spectrométrie Raman (100) selon l'une quelconque des revendications précédentes, dans lequel les histogrammes de la pluralité de couleurs comprennent des histogrammes de couleurs rouge, verte et bleue.

6. Appareil d'inspection par spectrométrie Raman (100) selon l'une quelconque des revendications 1 à 4, comprenant en outre :
un contrôleur (60) configuré pour démarrer la source de lumière d'excitation pour émettre un signal lumineux dans le cas où le dispositif de décision de sécurité d'échantillon (40) détermine que l'échantillon (50) à inspecter est sûr, et pour arrêter la source de lumière d'excitation d'émettre le signal lumineux dans le cas où le dispositif de décision de sécurité d'échantillon (40) détermine que l'échantillon (50) à inspecter n'est pas sûr.

7. Procédé d'inspection de sécurité d'échantillon pour l'inspection par spectrométrie Raman d'un échantillon, comprenant les étapes suivantes :

prendre une image de l'échantillon à inspecter en utilisant un chemin optique d'imagerie d'échantillon ;

générer des histogrammes d'une pluralité de couleurs de l'image ;

calculer un rapport entre la quantité de pixels dans une plage de niveaux de couleurs prédéterminée dans l'histogramme de chaque couleur et la quantité totale de pixels de l'image ; et comparer le rapport de la quantité de pixels à l'intérieur de la plage de niveaux de couleurs prédéterminée dans l'histogramme de chaque couleur sur la quantité totale de pixels de l'image avec un seuil prédéterminé,

où, dans le cas où le rapport de la quantité de pixels à l'intérieur de la plage de niveaux de couleurs prédéterminée dans l'histogramme de chaque couleur sur la quantité totale de pixels de l'image dépasse le seuil prédéterminé, il est déterminé que l'échantillon à inspecter n'est pas sûr ; sinon, il est déterminé que l'échantillon à inspecter est sûr.

**8.** Procédé selon la revendication 7, dans lequel les histogrammes de la pluralité de couleurs comprennent des histogrammes de couleurs rouge, verte et bleue.

**9.** Procédé selon la revendication 7, dans lequel ladite génération d'histogrammes d'une pluralité de couleurs de l'image comprend les étapes suivantes :

lire des informations d'image de chaque canal de couleur de l'image, et enregistrer les informations d'image de chaque canal de couleur dans une matrice de couleurs, où les éléments de la matrice sont en correspondance biunivoque avec les pixels de l'image ;

diviser les niveaux de couleurs en une pluralité d'intervalles, et compter une quantité d'éléments à l'intérieur de chaque intervalle dans chaque matrice de couleurs, en formant ainsi des histogrammes de la pluralité de couleurs.

**10.** Procédé selon la revendication 9, dans lequel un nombre de niveaux de couleurs dans chaque intervalle est compris entre 1 et 25.

**11.** Procédé selon la revendication 9, dans lequel la plage de niveaux de couleurs prédéterminée s'étend de 0 à m, où m est un nombre entier dont la valeur est comprise entre 10 et 60.

**12.** Procédé selon la revendication 9, dans lequel le seuil prédéterminé est supérieur ou égal à 0,72 et inférieur ou égal à 0,98.

**13.** Procédé selon l'une quelconque des revendications 7 à 12, comprenant en outre l'étape suivante :
démarrer l'inspection par spectrométrie Raman dans le cas où il est déterminé que l'échantillon à inspecter est sûr, et arrêter l'inspection par spectrométrie Raman dans le cas où il est déterminé que l'échantillon à inspecter n'est pas sûr.

FIG. 1

S100

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106770168 A